(19) Europäisches Patentamt
European Patent Office
Office européen des brevets

(11) EP 3 726 241 A1

(12) **EUROPÄISCHE PATENTANMELDUNG**

(43) Veröffentlichungstag:
21.10.2020 Patentblatt 2020/43

(51) Int Cl.:
G01S 5/06 (2006.01)     G01S 1/20 (2006.01)

(21) Anmeldenummer: 19170367.7

(22) Anmeldetag: 19.04.2019

(84) Benannte Vertragsstaaten:
AL AT BE BG CH CY CZ DE DK EE ES FI FR GB GR HR HU IE IS IT LI LT LU LV MC MK MT NL NO PL PT RO RS SE SI SK SM TR
Benannte Erstreckungsstaaten:
BA ME
Benannte Validierungsstaaten:
KH MA MD TN

(71) Anmelder: Siemens Mobility GmbH
81739 München (DE)

(72) Erfinder:
• Hladik, Reinhard
  1210 Wien (AT)
• Schröer, Guido
  81677 München (DE)
• Schiefer, Martin
  3100 St. Pölten (AT)

(74) Vertreter: Deffner, Rolf
Siemens Mobility GmbH
Postfach 22 16 34
80506 München (DE)

(54) **VERFAHREN UND SYSTEM ZUR LOKALISIERUNG EINES GEGENSTANDES**

(57)     Verfahren zur Lokalisierung eines Gegenstandes (100), welcher, in einem geometrischen Abstand (105) zueinander angeordnet, einen ersten Sender (110) und einen zweiten Sender (120), umfasst, und der erste Sender (110) ein erstes Signal (111) und der zweite Sender (120) ein zweites Signal (121) aussenden, wobei das erste und zweite Signal (111, 121) zueinander zeitlich synchron sind, und ferner ein Empfänger (10) vorgesehen ist, welcher über ein Empfangsmittel (20) das erste Signal (111) empfängt und eine erste Richtung (112) bestimmt, aus welcher das erste Signal (111) empfangen wird, und das zweite Signal (121) empfängt und eine zweite Richtung (122) bestimmt, aus welcher das zweite Signal (121) empfangen wird, und einen Laufzeitunterschied (115) zwischen dem ersten Signal (111) und dem zweiten Signal (121) bestimmt, und aus dem Laufzeitunterschied (115), dem Abstand (105), der ersten Richtung (112) und der zweiten Richtung (122) die Position des Gegenstandes (100) von einem Auswertemittel (21) bestimmt wird.

FIG 2

EP 3 726 241 A1

**Beschreibung**

Die Erfindung betrifft ein Verfahren und ein System zur Lokalisierung eines Gegenstandes.

In vielen Anwendungen wird die präzise Lokalisierung von Gegenständen, wie Fahrzeuge, Roboter oder Container benötigt, um Aufgaben aus dem Gebiet wie der Navigation, der industriellen Prozesse oder der Logistik zu erfüllen.

Die hochpräzise Lokalisierung kann technisch sehr komplex werden oder ein System kann beispielsweise die Verfügbarkeit von ausreichender Versorgungsleistung beschränken oder eine Funkkommunikation in der Reichweite, Senderrichtung oder Bandbreite limitieren, wodurch eine Lokalisierung unerwünscht eingeschränkt werden kann.

So kann beispielsweise für eine UWB-Funkkommunikation (ultra wide band) die Anforderung bestehen, dass in, speziell für Verkehrsanwendungen vorgesehenen Frequenzbereichen, welche eine für eine präzise Lokalisierung erforderliche Bandbreite aufweisen, nur mobile Einheiten senden dürfen.

Es ist Aufgabe der Erfindung ein Verfahren oder eine Vorrichtung für eine präzise Lokalisierung eines Gegenstandes bereitzustellen, wobei eine stationär gelegene Einheit entsprechenden hochfrequenten Signale empfängt und keine hochfrequenten Signale abstrahlt, das heißt kein Senden von Daten durchführt, sondern nur eine, von dem zu lokalisierenden Gegenstand umfassten, mobile Einheit hochfrequente Signale beziehungsweise Daten sendet.

Die erfindungsgemäße Aufgabe zur Lokalisierung eines Gegenstandes wird durch ein Verfahren gelöst, in welchem der Gegenstand, welcher einen ersten Sender und einen zweiten Sender umfasst, wobei der erste und der zweite Sender in einem geometrischen Abstand zueinander angeordnet sind,

und der erste Sender ein erstes Signal und der zweite Sender ein zweites Signal aussenden, wobei das erste und zweite Signal zueinander zeitlich synchron sind, und ferner ein Empfänger vorgesehen ist, welcher über ein Empfangsmittel

- das erste Signal empfängt und eine erste Richtung bestimmt, aus welcher das erste Signal empfangen wird, und
- das zweite Signal empfängt und eine zweite Richtung bestimmt, aus welcher das zweite Signal empfangen wird, und
- einen Laufzeitunterschied zwischen dem ersten Signal und dem zweiten Signal bestimmt,

und aus dem Laufzeitunterschied, dem Abstand, der ersten Richtung und der zweiten Richtung die Position des Gegenstandes von einem Auswertemittel bestimmt wird.

Dadurch wird erreicht, dass auf eine einfache Weise ein Verfahren geschaffen wird, welches eine Lokalisierung mit hoher Präzision erlaubt, sowie auf einen Betrieb eines Senders zur Positionsbestimmung abseits des Gegenstandes verzichtet.

Eine bevorzugte Ausführungsform sieht eine Anordnung des Empfängers abseits des Gegenstandes vor. Mit anderen Worten besteht keine physische Verbindung zwischen dem Empfänger und dem Gegenstand.

In einer Weiterbildung der Erfindung ist es vorgesehen, dass mittels eines Kommunikationsmittels die Position des Gegenstandes von dem Auswertemittel an eine Steuervorrichtung übertragen wird.

Dadurch wird erreicht, dass eine am Gegenstand angeordnete Vorrichtung die Position des Gegenstandes empfangen und weiterverarbeiten kann.

Die erfindungsgemäße Aufgabe zur Lokalisierung eines Gegenstandes wird auch durch ein System gelöst, in welchem der Gegenstand in einem geometrischen Abstand zueinander angeordnet, einen ersten Sender und einen zweiten Sender umfasst,

und der erste Sender dazu eingerichtet ist, ein erstes Signal auszusenden und der zweite Sender dazu eingerichtet ist, ein zweites Signal auszusenden, wobei das erste und zweite Signal zueinander zeitlich synchron sind,

und ferner ein Empfänger vorgesehen ist, welcher dazu eingerichtet ist, über ein Empfangsmittel

- das erste Signal zu empfangen und eine erste Richtung zu bestimmen, aus welcher das erste Signal empfangen wird, und
- das zweite Signal zu empfangen und eine zweite Richtung zu bestimmen, aus welcher das zweite Signal empfangen wird, und
- einen Laufzeitunterschied zwischen dem ersten Signal und dem zweiten Signal zu bestimmen,

und vom Empfänger ein Auswertemittel umfasst ist, welches dazu eingerichtet ist, aus dem Laufzeitunterschied, dem Abstand, der ersten Richtung und der zweiten Richtung die Position des Gegenstandes zu bestimmen.

In einer Weiterbildung der Erfindung ist es vorgesehen, dass der Gegenstand beweglich ist, bevorzugt ein Fahrzeug, besonders bevorzugt ein Bus, und sich der Gegenstand auf einem Verkehrsweg befindet.

Dadurch wird erreicht, dass der Gegenstand mobil ist und sich gegenüber dem Empfänger bewegen kann, wodurch eine relative Positionsbestimmung des Fahrzeugs zum Empfänger ermöglicht wird. Dadurch kann beispielsweise die Position eines Fahrzeugs, wie einem PKW, LKW oder Bus auf einem Verkehrsweg oder einer Verkehrsfläche wie einer Straße oder einer Kreuzung mit sehr hoher Präzision, beispielsweise im cm-Bereich, auf eine einfache Weise bestimmt werden.

In einer Weiterbildung der Erfindung ist es vorgesehen, dass der Empfänger stationär, vorzugsweise an oder bei einem Verkehrsweg, angeordnet ist.

Mit an oder bei einem Verkehrsweg ist gemeint, dass eine geometrische Nähe zwischen den beiden Sendern und dem Empfänger erreicht wird, um die Reichweite des Systems günstig zu gestalten und Empfangssignale mit einer hinreichenden Qualität empfangen und auswerten zu können. Die Sendeleistung ist häufig durch Funkvorschriften reguliert.

Dadurch wird erreicht, dass der Empfänger an einer Position, beispielsweise an einem Verkehrszeichen, einer Ampel oder einer anderen Einrichtung an oder neben einer Straße, angebracht werden kann. Die Position des Empfängers kann mit konventionellen geodätischen Verfahren bestimmt werden, wodurch eine absolute Positionsbestimmung des Fahrzeugs erfolgen kann.

In einer Weiterbildung der Erfindung ist es vorgesehen, dass der erste und zweite Sender jeweils ein UWB-Sender sind, welche bevorzugt in einem Frequenzbereich bei 4 GHz oder bei 6.5 GHz und besonders bevorzugt mit einer Bandbreite von 500 MHz arbeiten.

Dadurch wird erreicht, dass für eine hochpräzise Positionsbestimmung vorteilhafte große Bandbreite genützt werden kann.

In einer Weiterbildung der Erfindung ist es vorgesehen, dass ferner eine Steuervorrichtung sowie ein Kommunikationsmittel umfasst sind, wobei das Kommunikationsmittel dazu eingerichtet ist, einen Kommunikationskanal zwischen dem Auswertemittel und der Steuervorrichtung herzustellen und das System dazu eingerichtet ist, die Position des Gegenstandes von dem Auswertemittel über den Kommunikationskanal an die Steuervorrichtung zu übertragen.

Dadurch wird erreicht, dass eine, per Funkkommunikation verbundene Steuervorrichtung die ermittelte Position des Gegenstands bzw. des Fahrzeugs empfangen und weiterverarbeiten kann.

In einer Weiterbildung der Erfindung ist es vorgesehen, dass die Steuervorrichtung von dem Gegenstand umfasst ist und bevorzugt ein Fahrerassistenzsystem, besonders bevorzugt ein Navigationssystem ist.

Dadurch wird erreicht, dass die Steuervorrichtung beispielsweise am Fahrzeug angeordnet ist, wodurch die ermittelte Positionsinformation am Fahrzeug weiterverarbeitet werden kann.

In einer Weiterbildung der Erfindung ist es vorgesehen, dass das Kommunikationsmittel ein Funkkommunikationssystem nach dem ITS-G5 oder IEEE 802.11p Standard ist.

Dadurch wird erreicht, dass ein Kommunikationskanal, der für andere Anwendungen bereits im Fahrzeug integriert sein kann, ebenso durch das erfindungsgemäße Verfahren genutzt wird und so eine Synergie zu anderen Systemen in einem Fahrzeug entstehen kann.

Die genannten Weiterbildungen der Erfindung können untereinander kombiniert werden.

Die Erfindung wird nachfolgend anhand eines in den beigeschlossenen Zeichnungen dargestellten Ausführungsbeispiels näher erläutert. In den Zeichnungen zeigt:

Fig. 1    ein schematisches Beispiel eines Szenarios für eine Lokalisierung eines Fahrzeugs gemäß dem Verfahren nach der Erfindung,

Fig. 2    ein schematisches Blockschaltbild gemäß der Anordnung der Fig. 1,

Fig. 3    eine vereinfachte Darstellung der Fig. 2.

Es ist klar, dass nicht alle Teile des erfindungsgemäßen Systems beziehungsweise zur Ausführung des erfindungsgemäßen Verfahrens gezeigt sind, wie beispielsweise elektronische Steuerkomponenten, Stromversorgungen und Befestigungskomponenten. Zum Zweck des besseren Verständnisses werden diese Teile nicht gezeigt und beschrieben.

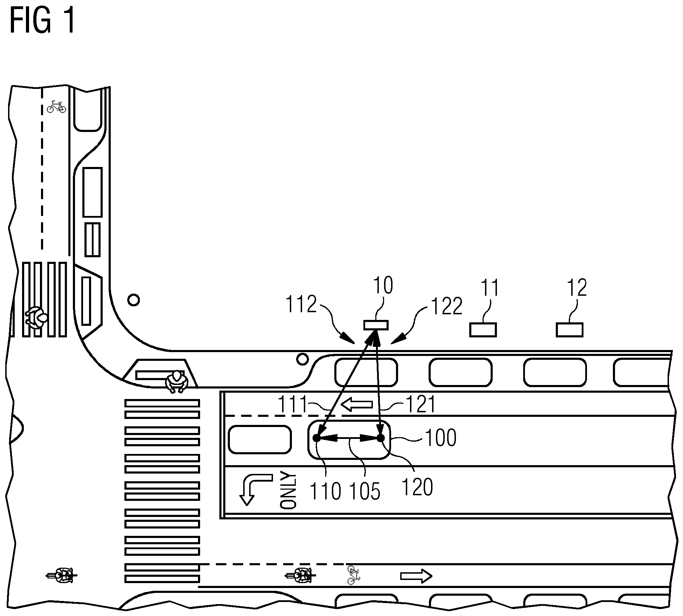

Fig. 1 zeigt ein schematisch ein Ausführungsbeispiel für ein System gemäß der Erfindung mit einem Szenario für eine Lokalisierung eines Fahrzeugs 100, beispielsweise ein Bus, welches sich auf einer Verkehrsfläche, in diesem Beispiel eine Kreuzung, befindet.

Das Fahrzeug 100 weist in einem geometrischen Abstand 105 zueinander angeordnet einen ersten Sender 110 und einen zweiten Sender 120 auf.

Der geometrische Abstand 105 zwischen zwei Sendern 110 und 120 sollte so groß als möglich sein, beispielsweise 2 bis 5 Meter, und ist in der Regel durch die Abmessungen des Fahrzeugs 100 beschränkt. Ist das Fahrzeug beispielsweise ein Bus, so kann ein noch größerer Abstand wie 5 bis 15 Meter realisiert werden.

Der erste Sender 110 ist dazu eingerichtet, ein erstes Signal 111 auszusenden. Der zweite Sender 120 ist dazu eingerichtet, ein zweites Signal 121 auszusenden, wobei das erste und zweite Signal 111, 121 zueinander zeitlich synchron sind.

Der erste und der zweite Sender 111, 121 sind jeweils ein UWB-Sender, welche beispielweise in einem Frequenzbereich bei 4 GHz oder bei 6.5 GHz und mit einer Bandbreite von 500 MHz arbeiten.

Neben oder angrenzend zur Verkehrsfläche oder Verkehrsweg ist stationär ein Empfänger 10-12 vorgesehen, welcher dazu eingerichtet ist, über ein Empfangsmittel

- das erste Signal 111 zu empfangen und eine erste Richtung 112 zu bestimmen, aus welcher das erste Signal 111 empfangen wird, und
- das zweite Signal 121 zu empfangen und eine zweite Richtung 122 zu bestimmen, aus welcher das zweite Signal 121 empfangen wird.

Der Empfangswinkel 112, 122 zum jeweiligen Sender 110, 120 kann durch ein entsprechendes Empfangsmittel bestimmt werden, beispielsweise durch eine Antennengruppe, einen IQ-Empfänger und eine Auswerteeinheit, wie im Stand der Technik bekannt.

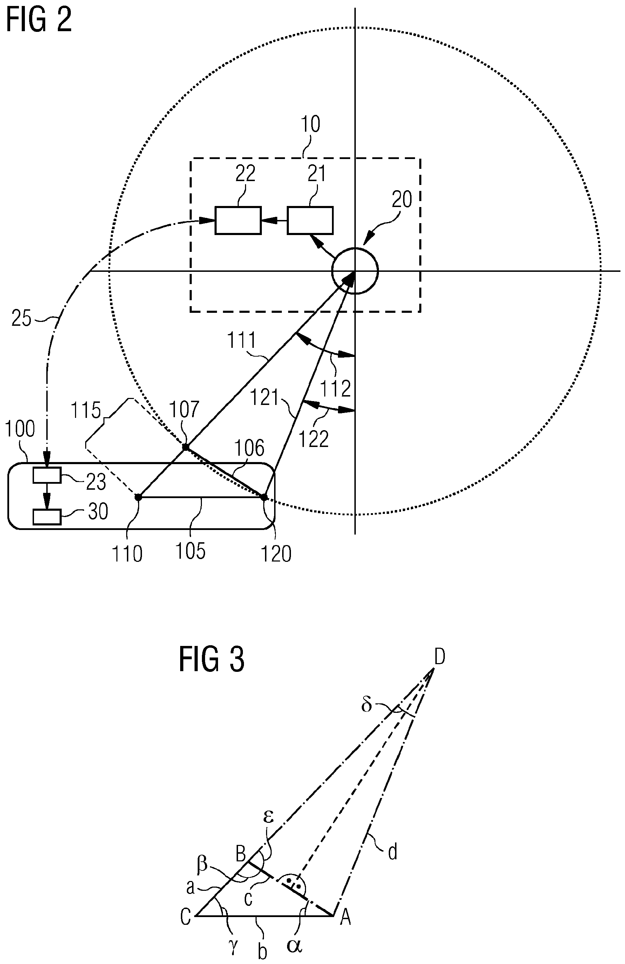

Fig. 2 zeigt im Detail das Szenario gemäß der Fig. 1.

Der Empfänger 10-12 ist ferner dazu eingerichtet, über das Empfangsmittel 20 einen Laufzeitunterschied 115 zwischen dem ersten Signal 111 und dem zweiten Signal 121 zu bestimmen.

Dies kann beispielsweise durch Phasenmessung zwischen den beiden Signalen 111 und 121 erfolgen.

Der Empfänger 10-12 weist ferner ein Auswertemittel 21 auf, welches dazu eingerichtet ist, aus dem Laufzeitunterschied 115, dem Abstand 105, der ersten Richtung 112 und der zweiten Richtung 122 die Position des Gegenstandes 100 zu bestimmen.

Zur Verbesserung der Signalqualität der beiden Signale 111 und 121 kann beispielsweise ein Kalman-Filter eingesetzt werden, wodurch Fehler in realen Messwerten reduziert oder Schätzungen für nicht messbare Systemgrößen geliefert werden können.

**Fig. 3** zeigt eine Darstellung von Dreiecken, welche das Szenario der Fig. 2 vereinfacht repräsentieren sollen.

Ein erstes Dreieck ist durch die Punkte A, B und C gebildet.

Der Punkt *A* entspricht der Position des zweiten Senders 120.

Der Punkt *B* entspricht der Position 107 gemäß der Fig. 2.

Der Punkt *C* entspricht der Position des ersten Senders 110.

Im Weiteren ist zur einfacheren Darstellung mit einer Kante auch deren Kantenlänge gemeint.

Eine Kante *a* verbindet die Punkte *B* und *C*, wobei die Kantenlänge der Kante *a* aus dem Laufzeitunterschied 115 als eine äquivalente geometrische Distanz berechnet werden kann:

$$s \approx c \cdot t$$

Der Weg *s* kann somit angenähert aus der

Lichtgeschwindigkeit *c* und der gemessenen Zeit *t* bestimmt werden. Mit anderen Worten kann der Laufzeitunterschied 115 durch den zeitlichen Versatz zwischen dem ersten Signal 111 und dem zweiten Signal 121 durch das Empfangsmittel 20 bestimmt werden. Im ersten Dreieck liegt ein Winkel *a* der Kante *a* gegenüber.

Eine Kante *b* verbindet die Punkte *A* und *C* und entspricht dem Abstand 105 zwischen dem ersten Sender 110 und dem zweiten Sender 120.

Im Dreieck liegt ein Winkel *β* der Kante *b* gegenüber.

Eine Kante *c* verbindet die Punkte *A* und *B*.

Im Dreieck liegt ein Winkel *γ* der Kante *c* gegenüber.

Es ist ein zweites, gleichschenkeliges Dreieck durch die Punkte *A*, *B* und *D* gebildet, wobei die Punkte *A* und *B*, sowie die Kante *c* mit dem ersten Dreieck identisch sind.

Der Punkt *D* entspricht der Position des Empfangsmittels 20, das heißt beispielsweise einer Empfangsantenne des Empfangsmittels 20.

Zwei, jeweils gleichlange Schenkel *d* des zweiten Dreiecks spannen einen Winkel *δ* auf, wobei der Winkel *δ* durch die Winkel-Differenz zwischen dem ersten Empfangswinkel 112 zum Sender und dem zweiten Empfangswinkel 122 zum Sender gebildet ist. Ein Bezugskoordinatensystem für die Empfangswinkelmessung wird durch die Bestimmung der Winkel-Differenz kompensiert.

Der Winkel *δ* liegt der Kante *c* gegenüber.

Das zweite Dreieck kann einfach in zwei symmetrische dritte Dreiecke geteilt werden, welche einen ersten Winkel mit *δ*/2, einen zweiten Winkel *ε* und einen dritten, rechten Winkel einschließen.

Gemäß dem Innenwinkelsatz eines Dreiecks

$$\delta/2 + \varepsilon + 90° = 180°$$

und dem Zusammenhang zwischen dem ersten und dem zweiten Dreieck

$$\beta + \varepsilon = 180°$$

kann der Winkel *β* bestimmt werden:

$$\beta = \delta/2 + 90°$$

Aus dem Sinussatz

$$\frac{a}{sin(\alpha)} = \frac{b}{sin(\beta)}$$

kann der Winkel *α* bestimmt werden.

Somit kann der Winkel *γ* bestimmt werden:

$$\gamma = 180° - \alpha - \beta$$

Über den Kosinussatz kann nun die Kantenlänge *c* bestimmt werden:

$$c^2 = a^2 + b^2 + cos(\gamma)$$

Außerdem kann die gesuchte Entfernung *d* über den Zusammenhang

$$cos\left(\delta/2\right) = \frac{c/2}{d}$$

und somit die Position des Fahrzeugs 100 bestimmt werden.

Ferner kann das System eine Steuervorrichtung 30 sowie ein Kommunikationsmittel 22 umfassen, wobei das Kommunikationsmittel 22 dazu eingerichtet ist, einen Kommunikationskanal 25 zwischen dem Auswertemittel 21 und der Steuervorrichtung 30 herzustellen und das System dazu eingerichtet ist, die Position des Gegenstandes 100 von dem Auswertemittel 21 über den Kommunikationskanal 25 an die Steuervorrichtung 30 zu übertragen.

Die Steuervorrichtung 30 kann von dem Fahrzeug 100 umfasst sein und beispielsweise ein Fahrerassistenzsystem oder ein Navigationssystem sein.

Das Kommunikationsmittel 22 kann ein Funkkommunikationssystem nach dem ITS-G5 oder IEEE 802.11p Standard mit einem entsprechenden Kommunikationskanal sein.

**Bezugszeichenliste:**

| | |
|---|---|
| 10-12 | Empfänger |
| 100 | Fahrzeug |
| 105 | geometrischer Abstand zwischen zwei Sendern |
| 106 | Dreiecks-Kantenlänge |
| 107 | Dreiecks-Eckpunkt |
| 110, 120 | Sender |
| 111, 121 | Signal |
| 112, 122 | Empfangswinkel zum Sender |
| 121 | Laufzeitunterschied zwischen Signalen von zwei Sendern |
| 130 | Dreiecks-Winkel |
| 20 | Empfangsmittel |
| 21 | Auswertemittel |
| 22 | Kommunikationsmittel |
| 25 | Kommunikationskanal |
| 30 | Steuervorrichtung |
| $a,b,c,d$ | Dreiecks-Kante |
| $A,B,C,D$ | Dreiecks-Eckpunkt |
| $\alpha,\beta,\gamma,\delta,\varepsilon$ | Dreiecks-Winkel |

**Patentansprüche**

1. Verfahren zur Lokalisierung eines Gegenstandes (100), welcher, in einem geometrischen Abstand (105) zueinander angeordnet, einen ersten Sender (110) und einen zweiten Sender (120), umfasst, und der erste Sender (110) ein erstes Signal (111) und der zweite Sender (120) ein zweites Signal (121) aussenden, wobei das erste und zweite Signal (111, 121) zueinander zeitlich synchron sind, und ferner ein Empfänger (10-12) vorgesehen ist, welcher über ein Empfangsmittel (20)

   • das erste Signal (111) empfängt und eine erste Richtung (112) bestimmt, aus welcher das erste Signal (111) empfangen wird, und
   • das zweite Signal (121) empfängt und eine zweite Richtung (122) bestimmt, aus welcher das zweite Signal (121) empfangen wird, und
   • einen Laufzeitunterschied (115) zwischen dem ersten Signal (111) und dem zweiten Signal (121) bestimmt,

   und aus dem Laufzeitunterschied (115), dem Abstand (105), der ersten Richtung (112) und der zweiten Richtung (122) die Position des Gegenstandes (100) von einem Auswertemittel (21) bestimmt wird.

2. Verfahren nach dem vorhergehenden Anspruch, wobei mittels eines Kommunikationsmittels die Position des Gegenstandes (100) von dem Auswertemittel (21) an eine Steuervorrichtung (30) übertragen wird.

3. System zur Lokalisierung eines Gegenstandes (100), welcher, in einem geometrischen Abstand (105) zueinander angeordnet, einen ersten Sender (110) und einen zweiten Sender (120), umfasst, und der erste Sender (110) dazu eingerichtet ist, ein erstes Signal (111) auszusenden und der zweite Sender (120) dazu eingerichtet ist, ein zweites Signal (121) auszusenden, wobei das erste und zweite Signal (111, 121) zueinander zeitlich synchron sind, und ferner ein Empfänger (10-12) vorgesehen ist, welcher dazu eingerichtet ist, über ein Empfangsmittel (20)

   • das erste Signal (111) zu empfangen und eine erste Richtung (112) zu bestimmen, aus welcher das erste Signal (111) empfangen wird, und
   • das zweite Signal (121) zu empfangen und eine zweite Richtung (122) zu bestimmen, aus welcher das zweite Signal (121) empfangen wird, und
   • einen Laufzeitunterschied (115) zwischen dem ersten Signal (111) und dem zweiten Signal (121) zu bestimmen,

   und vom Empfänger (10-12) ein Auswertemittel (21) umfasst ist, welches dazu eingerichtet ist, aus dem Laufzeitunterschied (115), dem Abstand (105), der ersten Richtung (112) und der zweiten Richtung (122) die Position des Gegenstandes (100) zu bestimmen.

4. System nach dem vorhergehenden Anspruch, wobei der Gegenstand (100) beweglich ist, bevorzugt ein Fahrzeug, besonders bevorzugt ein Bus, und sich der Gegenstand (100) auf einem Verkehrsweg befindet.

5. System nach einem der Ansprüche 3 oder 4, wobei der Empfänger (10-12) stationär, vorzugsweise an einem Verkehrsweg, angeordnet ist.

6. System nach einem der Ansprüche 3 bis 5, wobei der erste und zweite Sender (111, 121) jeweils ein UWB-Sender sind, welche bevorzugt in einem Frequenzbereich bei 4 GHz oder bei 6.5 GHz und besonders bevorzugt mit einer Bandbreite von 500 MHz arbeiten.

7. System nach einem der Ansprüche 3 bis 6, wobei ferner eine Steuervorrichtung (30) sowie ein Kommunikationsmittel (22) umfasst sind, wobei das Kommunikationsmittel (22) dazu eingerichtet ist, einen Kommunikationskanal (25) zwischen dem Auswertemittel (21) und der Steuervorrichtung (30) herzustellen und das System dazu eingerichtet ist, die Position des Gegenstandes (100) von dem Auswertemittel (21) über den Kommunikationskanal (25) an die Steuervorrichtung (30) zu übertragen.

8. System nach Anspruch 7, wobei die Steuervorrichtung (30) von dem Gegenstand (100) umfasst ist und bevorzugt ein Fahrerassistenzsystem, besonders bevorzugt ein Navigationssystem ist.

9. System nach einem der Ansprüche 7 oder 8, wobei das Kommunikationsmittel (22) ein Funkkommunikationssystem nach dem ITS-G5 oder IEEE 802.11p Standard ist.

FIG 1

FIG 2

FIG 3

**Europäisches Patentamt**
**European Patent Office**
**Office européen des brevets**

## EUROPÄISCHER RECHERCHENBERICHT

Nummer der Anmeldung

EP 19 17 0367

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2017/108947 A1 (FRAUNHOFER-GESELLSCHAFT ZUR FÖRDERUNG DER ANGEWANDTEN FORSCHUNG E V [D] 29. Juni 2017 (2017-06-29) * Seite 7, Zeile 3 - Seite 24, Zeile 8 * * Abbildungen 1-10 * * Zusammenfassung * ----- | 1-9 | INV. G01S5/06 G01S1/20 |
| X | WO 2007/013069 A1 (ELTA SYSTEMS LTD [IL]; FIEREIZEN MOSHE [IL]) 1. Februar 2007 (2007-02-01) * Seite 6, Zeile 21 - Seite 9, Zeile 11 * * Abbildungen 1, 2 * * Zusammenfassung * ----- | 1-9 | |
| A | WO 03/028278 A1 (TIME DOMAIN CORP [US]) 3. April 2003 (2003-04-03) * Seite 34, Zeile 1 - Seite 39, Zeile 7 * * Abbildungen 9-13 * * Zusammenfassung * ----- | 1-9 | |
| A | EP 1 666 912 A1 (ABATEC ELECTRONIC AG [AT]) 7. Juni 2006 (2006-06-07) * Seite 2, Zeile 35 - Seite 9, Zeile 3 * * Abbildungen 1, 2 * * Zusammenfassung * ----- | 1-9 | **RECHERCHIERTE SACHGEBIETE (IPC)** G01S |

Der vorliegende Recherchenbericht wurde für alle Patentansprüche erstellt

| Recherchenort | Abschlußdatum der Recherche | Prüfer |
|---|---|---|
| München | 5. September 2019 | von Walter, Sven-Uwe |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

EP 3 726 241 A1

**ANHANG ZUM EUROPÄISCHEN RECHERCHENBERICHT**
**ÜBER DIE EUROPÄISCHE PATENTANMELDUNG NR.**                EP 19 17 0367

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-09-2019

| Im Recherchenbericht angeführtes Patentdokument | Datum der Veröffentlichung | Mitglied(er) der Patentfamilie | Datum der Veröffentlichung |
|---|---|---|---|
| WO 2017108947 A1 | 29-06-2017 | DE 102015122420 A1<br>EP 3394629 A1<br>US 2019004138 A1<br>WO 2017108947 A1 | 22-06-2017<br>31-10-2018<br>03-01-2019<br>29-06-2017 |
| WO 2007013069 A1 | 01-02-2007 | AT 517359 T<br>EP 1910864 A1<br>ES 2369996 T3<br>IL 169854 A<br>US 2010001896 A1<br>WO 2007013069 A1 | 15-08-2011<br>16-04-2008<br>09-12-2011<br>28-11-2013<br>07-01-2010<br>01-02-2007 |
| WO 03028278 A1 | 03-04-2003 | US 2003058971 A1<br>WO 03028278 A1 | 27-03-2003<br>03-04-2003 |
| EP 1666912 A1 | 07-06-2006 | KEINE | |

Für nähere Einzelheiten zu diesem Anhang : siehe Amtsblatt des Europäischen Patentamts, Nr.12/82